# EUROPEAN PATENT APPLICATION

(11) **EP 2 511 125 A2**
(43) Date of publication of application: **17.10.2012**
(21) Application number: 12163761.5
(22) Date of filing: 11.04.2012
(51) Int. Cl.: B60L 11/18

(54) **Charging device for use with electric vehicles and methods of assembling same**

(30) Priority: 14.04.2011 US 201113086899
(71) Applicant: GENERAL ELECTRIC COMPANY, Schenectady, NY 12345 (US)
(72) Inventor: Yasko, Christopher Charles, Atlanta, GA Georgia 30339-8402 (US)
(74) Representative: Picker, Madeline Margaret

(57) **Abstract**

A charging device (104) for use with an electric vehicle (102) including a power storage device (106) includes a power delivery system (214) configured to deliver power to the power storage device. The charging device also includes a controller (200) coupled to the power delivery system. The controller is configured to determine that an initialization process has completed after the charging device has experienced a loss of power and enable the power delivery system to deliver power to the power storage device at a defmed start time and after the initialization process has completed.

## Description

### BACKGROUND OF THE INVENTION

The present application relates generally to charging devices and, more particularly, to charging devices for use with electric vehicles and methods of assembling the same.

As electric vehicles and/or hybrid electric vehicles have gained popularity, an associated need to accurately manage the delivery of electrical energy to such vehicles has increased. Moreover, a need to provide safe and efficient charging devices or stations has been created by the increased use of such vehicles.

At least some known charging stations include a power cable or another conductor that may be removably coupled to the electric vehicle. Such charging stations receive electricity from an electric utility distribution network or from another electricity source, and meter the delivery of electricity to the electric vehicle through the power cable.

In at least some electric utility distribution networks, a plurality of charging devices receive electricity from a common electrical distribution component, such as a transformer. However, if each charging device supplies charging current to an electric vehicle at the same time, the current supplied through the electrical distribution component may exceed a rated current limit of the component. For example, a loss of power may affect a plurality of charging stations coupled to a common electrical distribution component. If power is restored substantially simultaneously to the charging stations, each charging station may attempt to draw current through the component to charge an electric vehicle. Such a rapid "inrush surge" current supplied through the electrical distribution component may damage the component and/or may undesirably cause a circuit breaker or another protection device to disable power to all charging devices coupled to the electrical distribution component.

### BRIEF DESCRIPTION OF THE INVENTION

In one embodiment, a charging device for use with an electric vehicle including a power storage device is provided that includes a power delivery system configured to deliver power to the power storage device. The charging device also includes a controller coupled to the power delivery system. The controller is configured to determine that an initialization process has completed after the charging device has experienced a loss of power and enable the power delivery system to deliver power to the power storage device at a defined start time and after the initialization process has completed.

In another embodiment, a controller for use with a charging device is provided that includes a memory device and a processor coupled to the memory device. The processor is configured to receive data from the memory device and determine that an initialization process has completed after the charging device has experienced a loss of power. The processor is also configured to determine a start time to deliver power to a power storage device at least partially based on the data received, and transmit a signal to a power delivery system to cause the power delivery system to deliver power to the power storage device at the start time.

In yet another embodiment, a method of assembling a charging device is provided that includes providing a power delivery system configured to deliver power to a power storage device and coupling a controller to the power delivery system. The controller is configured to determine that an initialization process has completed after the charging device has experienced a loss of power, select a start time for power to be delivered to the power storage device, and enable the power delivery system to deliver power to the power storage device at the selected start time.

### BRIEF DESCRIPTION OF THE DRAWINGS

Fig. 1 is a block diagram of an example system for use in charging an electric vehicle.
Fig. 2 is a block diagram of an example charging device that may be used with the system shown in Fig. 1.
Fig. 3 is a flow diagram of an example method that may be used for controlling a charging device that may be used with the charging device shown in Fig. 2.

### DETAILED DESCRIPTION OF EMBODIMENTS OF THE INVENTION

In some embodiments, the term "electric vehicle" refers generally to a vehicle that includes one or more electric motors that are used for propulsion. Energy used to propel electric vehicles may come from various sources, such as, but not limited to, an on-board rechargeable battery and/or an on-board fuel cell. In one embodiment, the electric vehicle is a hybrid electric vehicle, that captures and stores energy generated, for example, by braking. Moreover, a hybrid electric vehicle uses energy stored in an electrical source, such as a battery, to continue operating when idling to conserve fuel. Some hybrid electric vehicles are capable of recharging the battery by plugging into a power receptacle, such as a power outlet. Accordingly, the term "electric vehicle" as used herein may refer to a hybrid electric vehicle or any other vehicle to which electrical energy may be delivered, for example, via the power grid.

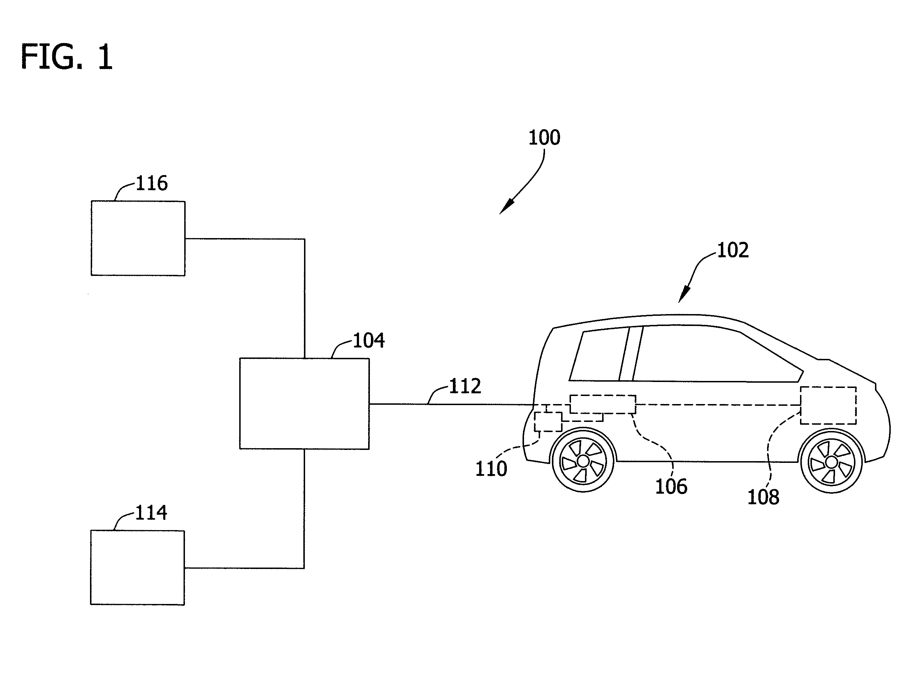

Fig. 1 illustrates an example system 100 for use in charging, or providing electricity to, an electric vehicle 102. In the example embodiment, system 100 includes a charging device 104 coupled to electric vehicle 102. In the example embodiment, electric vehicle 102 includes at least one power storage device 106, such as a battery and/or any other storage device, coupled to a motor 108. Moreover, in the example embodiment, electric vehicle 102 includes a vehicle controller 110 coupled to power storage device 106.

In the example embodiment, charging device 104 is removably coupled to power storage device 106 and to vehicle controller 110 by at least one power conduit 112. Alternatively, charging device 104 may be coupled to power storage device 106 and/or vehicle controller 110 using any other conduit or conduits, and/or charging device 104 may be coupled to vehicle controller 110 via a wireless data link (not shown). In the example embodiment, power conduit 112 includes at least one conductor (not shown) used for supplying electricity to power storage device 106 and/or to any other component within electric vehicle 102, and at least one conductor (not shown) for transmitting data to, and receiving data from, vehicle controller 110 and/or any other component within electric vehicle 102. Alternatively, power conduit 112 may include a single conductor that transmits and/or receives power and/or data, or any other number of conductors that enables system 100 to function as described herein. Moreover, in the example embodiment, charging device 104 is coupled to an electric power source 114, such as a power grid of an electric utility company, a generator, a battery, and/or any other device or system that provides electricity to charging device 104.

In the example embodiment, charging device 104 is coupled to at least one remote server 116 through a network, such as the Internet, a local area network (LAN), a wide area network (WAN), and/or any other network or data connection that enables charging device 104 to function as described herein. Server 116, in the example embodiment, communicates with charging device 104, for example, by transmitting a signal to charging device 104 to authorize payment and/or delivery of electricity to power storage device 106, to access customer information, and/or to perform any other function that enables system 100 to function as described herein.

In the example embodiment, server 116 and vehicle controller 110 each include at least one processor and at least one memory device (neither shown). Such processors may include any suitable programmable circuit that may include one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are example only, and thus are not intended to limit in any way the definition and/or meaning of the term "processor." The memory devices each include a computer readable medium, such as, without limitation, random access memory (RAM), flash memory, a hard disk drive, a solid state drive, a diskette, a flash drive, a compact disc, a digital video disc, and/or any suitable memory device that enables the processors to store, retrieve, and/or execute instructions and/or data.

During normal operation, in the example embodiment, a user couples power storage device 106 to charging device 104 with power conduit 112. The user may access a user interface (not shown in Fig. 1) of charging device 104 to enter information, such as payment information, and/or to initiate power delivery to power storage device 106. Charging device 104 communicates with server 116, for example, to authenticate the user, to process payment information, and/or to approve or authorize a power delivery. If charging device 104 receives a signal from server 116 that indicates approval or authorization to deliver power to power storage device 106, charging device 104 receives power from electric power source 114 and provides the power to power storage device 106 through power conduit 112.

In the example embodiment, charging device 104 communicates with vehicle controller 110 wirelessly, through power conduit 112, and/or through any other conduit, to control and/or to monitor the delivery of power to power storage device 106. For example, vehicle controller 110 may transmit signals to charging device 104 that are indicative of a charge level of power storage device 106 and/or a desired amount and/or rate of power to be provided by charging device 104. Moreover, charging device 104 may transmit signals to vehicle controller 110 indicative of an amount and/or rate of electricity being delivered to power storage device 106. Additionally or alternatively, charging device 104 and/or vehicle controller 110 may transmit and/or receive any other signals or messages that enable system 100 to function as described herein. When power storage device 106 has been charged to a desired level, charging device 104 ceases delivering power to power storage device 106 and the user disengages power conduit 112 from power storage device 106.

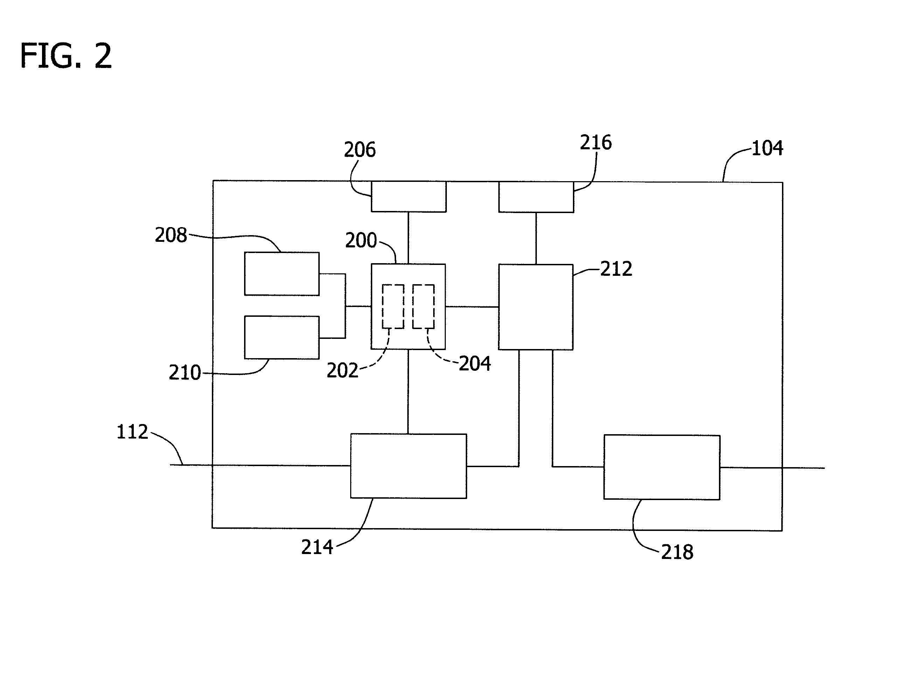

Fig. 2 is a block diagram of an example charging device 104 that may be used with system 100 (shown in Fig. 1). In the example embodiment, charging device 104 includes a controller 200 that includes a processor 202 and a memory device 204. As described more fully herein, controller 200 is coupled to a network interface 206, to a display 208, to a user interface 210, to a meter 212, and to a power delivery system 214.

Processor 202 includes any suitable programmable circuit which may include one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor." Memory device 204 includes a computer readable medium, such as, without limitation, random access memory (RAM), flash memory, a hard disk drive, a solid state drive, a diskette, a flash drive, a compact disc, a digital video disc, and/or any suitable device that enables processor 202 to store, retrieve, and/or execute instructions and/or data.

Network interface 206, in the example embodiment, transmits and receives data between controller 200 and a remote device or system, such as server 116 (shown in Fig. 1) and/or any other suitable computer system or device. In the example embodiment, network interface 206 communicates with the remote device or system and with controller 200 using any suitable communication protocol, such as a wired Ethernet and/or a wireless cellular protocol. Moreover, in the example embodiment, network interface 206 receives at least one signal and/or data from server 116 and/or any other remote device or system to control a power delivery to power storage device 106 and/or to control a startup of charging device 104.

In the example embodiment, display 208 includes a vacuum fluorescent display (VFD) and/or one or more light-emitting diodes (LED). Additionally or alternatively, display 208 may include, without limitation, a liquid crystal display (LCD), a cathode ray tube (CRT), a plasma display, and/or any suitable visual output device capable of displaying graphical data and/or text to a user. In the example embodiment, a charging status of power storage device 106 (shown in Fig. 1), payment information, user authentication information, and/or any other information may be displayed to a user on display 208.

User interface 210 includes, without limitation, a keyboard, a keypad, a touch-sensitive screen, a scroll wheel, a pointing device, a barcode reader, a magnetic card reader, a radio frequency identification (RFID) card reader, an audio input device employing speech-recognition software, and/or any suitable device that enables a user to input data into charging device 104 and/or to retrieve data from charging device 104. In the example embodiment, the user may operate user interface 210 to initiate and/or terminate the delivery of power to power storage device 106. In one embodiment, the user may input user authentication information and/or payment information using user interface 210. Moreover, in the example embodiment, a technician or another user may operate user interface 210 and/or another input mechanism (not shown) to control a startup of charging device 104, for example, after charging device 104 has been shut down or restarted. For example, a user may manipulate user interface 210 to select or define a time (or "start time") to initiate power delivery from charging device 104 after charging device 104 is restarted, and the start time may be transmitted to processor 202 and/or stored within memory device 204.

In the example embodiment, power delivery system 214 is coupled to power conduit 112 and to meter 212. Moreover, in the example embodiment, power delivery system 214 includes a contactor (not shown) coupled to, and controlled by, controller 200. Alternatively or additionally, power delivery system 214 includes at least one switching device or any other device (not shown) that converts alternating current (AC) power received from electric power source 114 to direct current (DC) power for use in charging power storage device 106. In the example embodiment, controller 200 operates power delivery system 214, such as by opening the contactor, to interrupt the current flowing through power conduit 112 such that power storage device 106 is electrically disconnected from electric power source 114 (shown in Fig. 1). Moreover, in the example embodiment, controller 200 operates power delivery system 214, such as by closing the contactor, to enable current to flow through power conduit 112 such that power storage device 106 is electrically connected to electric power source 114.

Moreover, in the example embodiment, meter 212 is coupled to power delivery system 214 and to controller 200 for use in measuring and/or calculating the current, voltage, and/or power provided from electric power source 114 to power storage device 106. In the example embodiment, meter 212 is an advanced metering infrastructure (AMI) meter 212 that communicates with an AMI network (not shown) via an AMI interface 216. Moreover, in the example embodiment, AMI interface 216 communicates with at least one system or device via the AMI network using power line communication, communication via twisted pair conductors, radio frequency communication, and/or using any other communication technology or protocol that enables charging device 104 to function as described herein. In the example embodiment, electric power source 114 is coupled to and/or is a part of the AMI network.

A current protection device 218 is coupled to meter 212 and to electric power source 114. Current protection device 218, in the example embodiment, electrically isolates or disconnects charging device 104 from electric power source 114 if the current received from electric power source 114 exceeds a predetermined threshold or current limit. In the example embodiment, current protection device 218 is an electric circuit contactor 218. Alternatively, current protection device 218 may be a fuse, a circuit breaker, a relay, and/or any other device that enables current protection device 218 to function as described herein.

During operation, in the example embodiment, charging device 104 controllably supplies current to electric vehicle 102. More specifically, in the example embodiment, charging device 104 receives current from electric power source 114 and measures the amount of current received via meter 212. Controller 200 determines whether current should be provided to power storage device 106. In one embodiment, controller 200 receives authorization to provide power to power storage device 106, for example, from a utility system or device via AMI interface 216, from a remote system or device via network interface 206, and/or from any other system or device via any interface that enables charging device 104 to function as described herein. Upon receiving the authorization and/or determining that current should be provided to electric vehicle 102, controller 200 operates power delivery system 214 (e.g., closes the contactor) and the current is transmitted through power conduit 112 to power storage device 106.

Moreover, charging device 104 may experience a loss of power or may be "shut down" while electric vehicle 102 is electrically coupled to charging device 104 via power conduit 112, and/or while power storage device 106 is receiving current from charging device 104. As used herein, the term "shut down" or "loss of power" refers to a process or state in which one or more components of charging device 104 are de-energized and/or are electrically disconnected from electric power source 114. For example, charging device 104 may be shut down or experience a loss of power during a maintenance event, during a fault or error within electric power source 114, during a demand response event initiated by a device or system within the AMI network, and/or any other event that causes one or more components of charging device 104 to be de-energized. Moreover, a loss of power and/or a shut down event may additionally or alternatively include a restart or "reboot" of charging device 104, wherein one or more components of charging device 104 are reset or initialized to startup values as a result of a temporary reduction in power to charging device 104 and/or as a result of a fault or error within charging device 104.

After power is restored to charging device 104, in the example embodiment, the delivery of current to power storage device 106 is controllably commenced or resumed. More specifically, in the example embodiment, charging device 104 executes an initialization process in which one or more components of charging device 104 are reset to a known operational state that enables charging device 104 to commence or resume power delivery. Charging device 104 determines a start time in which to commence or resume delivery of power to power storage device 106. In the example embodiment, the start time is set or determined to occur after the initialization process has completed. Alternatively, the start time may be any other time that enables charging device 104 to function as described herein.

In the example embodiment, controller 200 delays the start time for a predetermined time after the initialization process has completed (i.e., the start time occurs after a predetermined delay time has elapsed). More specifically, controller 200 waits for a delay time to elapse (after the initialization process has completed) before operating power delivery system 214 (e.g., by closing the contactor) to provide current to power storage device 106. In the example embodiment, controller 200 stores a delay value in a memory location of memory device 204 during normal operation. In the example embodiment, the delay value is retained (i.e., is persistent) in memory device 204 during a loss of power to charging device 104. In one embodiment, the delay value is a value randomly selected between a minimum value, such as about 0 minutes, and a maximum value, such as about 15 minutes. As used herein, the term "random" also includes pseudorandom algorithms and/or numbers. Alternatively, the delay value may be set to any other random value or to a value previously selected via user interface 210, such as a value between about 0 minutes and about 5 minutes, or any other value that enables charging device 104 to function as described herein.

After controller 200 determines that the initialization process has completed, controller 200 references the delay value stored in memory device 204. Controller 200 waits an amount of time represented by the delay value (hereinafter referred to as the "delay time"). More specifically, in the example embodiment, controller 200 waits for the delay time to elapse by counting down from the delay value to zero. Alternatively, controller 200 may count up from zero to the delay value or may count from any other value that enables charging device 104 to function as described herein. Once the delay time has elapsed, (i.e., when the start time occurs) controller 200 operates power delivery system 214 (e.g., by closing the contactor) to enable current to be provided to power storage device 106. As such, controller 200 enables charging device 104 to commence providing current to power storage device 106 at a different time than other charging devices that are re-energized after a common power loss, thus minimizing or reducing sudden increases in an inrush surge current drawn from a common power delivery component within a power distribution network.

In one embodiment, a system or device owned or operated by a utility company (hereinafter referred to as a "utility system") or any other system or device may control the delayed current delivery of charging device 104. More specifically, the utility system may transmit data to charging device 104 representative of the delay value. The data is received by network interface 206 and/or AMI interface 216 and is stored in the memory location within memory device 204 corresponding to the delay value. The data in memory device 204, including the delay value, is persistent during a loss of power. In another embodiment, the utility system and/or any other system or device may transmit data to charging device 104 representative of a time of day, a relative time, and/or any other time that charging device 104 should commence delivering current to power storage device 106.

Moreover, in the example embodiment, the delay value may be overridden such that charging device 104 provides current to power storage device 106 substantially immediately after the initialization process has completed. In one embodiment, the utility system may transmit data representative of an override of the delay value to charging device 104, and charging device 104 stores data representative of the override in a memory location within memory device 204. The data in memory device 204, including the override state, is persistent during a loss of power. Alternatively, any other system or device may transmit data representative of an override of the delay value. After the initialization process has completed, in the example embodiment, charging device 104 determines whether the memory location associated with the override includes data indicative of an override. If such an override is indicated, charging device 104 ignores the delay value and provides current to power storage device 106 substantially immediately after the initialization process has completed (i.e., the start time is determined to be substantially immediately after the initialization process has completed). However, if data representative of an override command is not stored in the associated memory location, controller 200 references the memory location associated with the delay value to determine the amount of time to wait before providing current to power storage device 106.

In another embodiment, a technician or another user may control the delayed current delivery of charging device 104. In such an embodiment, the user may manipulate user interface 210 to set a delay value and/or to override the delay value. For example, if the user desires to perform maintenance on charging device 104, the user may manipulate user interface 210 to disable or override the delay value during the next startup of charging device 104. Data representative of the delay value and/or the override is transmitted to processor 202 and/or memory device 204, and processor 202 determines the start time and/or delay value based on the data received.

In one embodiment, the data representative of an override of the delay value is automatically removed from the memory location by controller 200 after the initialization process has completed and/or after charging device 104 commences or resumes delivering power to power storage device 106. Alternatively, the user, the utility system, and/or any other system or device may provide data to controller 200 indicative of a number of startups to perform with the delay value overridden, and/or indicative that the override of the delay value persists until removed by the user, the utility system, and/or the other system or device.

Moreover, in another embodiment, the user, the utility system, a system within the AMI network, and/or any other remote system or device may override the delay value while controller 200 is already waiting for the delay value to elapse. In such an embodiment, charging device 104 commences delivering current to power storage device 106 once the delay value is overridden.

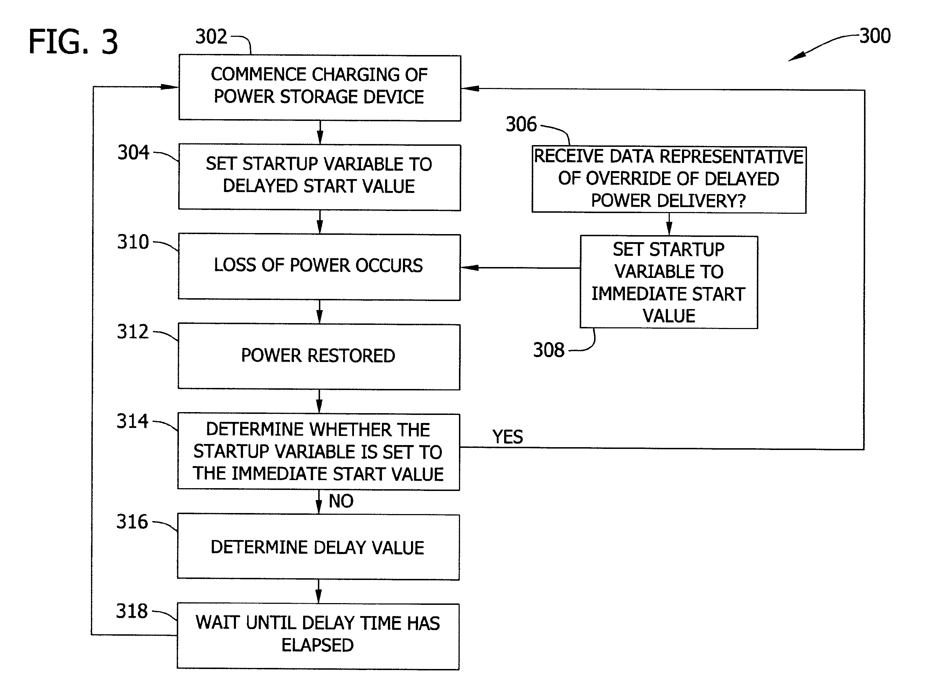

Fig. 3 is a flow diagram of an example method 300 for controlling a charging device, such as charging device 104 (shown in Fig. 1). In the example embodiment, method 300 is at least partially embodied within a plurality of instructions stored within memory device 204 that are executed by processor 202 (both shown in Fig. 2).

In the example embodiment, charging device 104 commences 302 charging a power storage device, such as power storage device 106 (shown in Fig. 1). Moreover, in the example embodiment, charging device 104 defaults to a delayed charging operation, as described more fully herein, during or after a startup of charging device 104 (i.e., after the initialization process has completed). More specifically, a predetermined memory location (hereinafter referred to as a "startup memory location") within memory device 204 is used to store data, such as a startup variable, representative of the startup operation of charging device 104. In the example embodiment, the startup variable is set to a value representative of a delayed power delivery (hereinafter referred to as a "delayed start value") to power storage device 106 as a default. The startup variable may be set to a value representative of an immediate power delivery (hereinafter referred to as an "immediate start value") to power storage device 106 when charging device 104 is notified and/or or directed to begin or resume charging power storage device 106 after a startup. Accordingly, during or after a startup of charging device 104, the startup variable is set 304 to the delayed start value and/or to any other value that enables method 300 to delay charging after a startup.

In some embodiments, a notification and/or data representative of an override of the delayed power delivery is received 306 by charging device 104. Such a notification and/or data may be generated by a utility company system, a system within the AMI network, from a remote system, from user interface 210, and/or from any other system or device that enables method 300 to function as described herein. Based on the received notification and/or data, the startup variable is set 308 to the immediate start value and/or any other value that enables method 300 to override the delayed power delivery to power storage device 106.

If a loss of power occurs 310 (i.e., if charging device 104 is de-energized) while charging device 104 is electrically coupled to power storage device 106, the charging of power storage device 106 is interrupted. When power is restored 312 (i.e., when charging device 104 is energized), charging device 104 completes a startup or initialization process. In one embodiment, after completing the initialization process, components of charging device 104 are energized, but charging device 104 does not resume the power delivery to power storage device 106 until charging device 104 receives authorization, such as from a utility system, from a remote system such as a system within the AMI network, from user interface 210, from receiving a predetermined value from memory device 204 (such as the immediate start value), from a notification or determination that the delay value has elapsed, and/or any other authorization device, system, or source that enables method 300 to function as described herein.

Once power is restored 312 and/or after the initialization process has completed, method 300 determines 314 whether the startup variable is set to the immediate start value. If the startup variable is set to the immediate start value, charging device 104 resumes or commences 302 charging power storage device 106. However, if the startup variable is set to the delayed startup value or any other value, a delay value is determined 316. In the example embodiment, the delay value is described above with reference to Fig. 2. As such, the delay value is stored in and/or retrieved from a memory location within memory device 204. Alternatively, the delay value is determined 316 to be any other delay value that enables method 300 to function as described herein.

In the example embodiment, charging device 104 waits 318 for an amount of time (the "delay time") represented by the delay value to elapse. When the delay time has elapsed, charging device 104 resumes or commences 302 charging power storage device 106.

While the example embodiment has been described with reference to an electric vehicle, it should be recognized that charging device 104 may be used with any suitable electrical load, such as an appliance, a machine, and/or any other device or system that includes a power storage device.

In contrast to prior art systems that may commence charging without a delay after a loss of power has occurred, charging device 104 is enabled to deliver charging power to electric vehicle 102 after a delay time has elapsed and/or at a selectable start time after an initialization process has completed. Such a delay time, in the example embodiment, is facilitated to be different than a delay time implemented by neighboring charging devices and/or charging devices coupled to a common electrical distribution component. As such, charging device 104 facilitates preventing and/or reducing a sudden, undesirable increase of inrush current being drawn from the electrical distribution component after a loss of power has occurred.

As described herein, a robust and effective charging device is provided. The charging device includes a controller that operates a power delivery system for use in supplying charging current to a power storage device of an electric vehicle. The controller is programmed with a selectable or defined start time and/or delay time, such as a randomly calculated delay time. If the charging device is notified of an impending shutdown event, the delay time may be overridden such that the charging device commences or resumes charging the power storage device without delay after power has been restored to the charging device. If, however, the charging device experiences an unexpected loss of power, after power has been restored, the charging device waits until the delay time has elapsed before commencing or resuming charging the power storage device. As such, the charging device is facilitated to initiate or resume charging the power storage device at a different time than other charging devices that experience a common loss of power. Accordingly, the charging device described herein facilitates gradually increasing the current and power supplied through a common electrical distribution component as additional charging devices resume or commence delivering power.

A technical advantage of the device and methods described herein includes at least one of (a) providing a power delivery system configured to deliver power to a power storage device; and (b) coupling a controller to a power delivery system, wherein the controller is configured to select a start time for power to be delivered to a power storage device, and enable the power delivery system to deliver power to the power storage device at the selected start time.

example embodiments of a charging device and methods of assembling a charging device are described above in detail. The charging device and methods are not limited to the specific embodiments described herein, but rather, components of the charging device and/or steps of the methods may be utilized independently and separately from other components and/or steps described herein. For example, the charging device may also be used in combination with other power systems and methods, and is not limited to practice with only the electric vehicle as described herein. Rather, the example embodiment can be implemented and utilized in connection with many other power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A charging device (104) for use with an electric vehicle (102) including a power storage device (106), said charging device comprising:
a power delivery system (214) configured to deliver power to the power storage device; and
a controller (200) coupled to said power delivery system, said controller configured to:
determine that an initialization process has completed after said charging device has experienced a loss of power; and
enable said power delivery system to deliver power to the power storage device at a defined start time and after the initialization process has completed.

2. A charging device (104) in accordance with Claim 1, wherein said controller (200) determines the start time to be substantially immediately after the initialization process has completed.

3. A charging device (104) in accordance with Claim 1 or Claim 2, wherein said controller (200) determines the start time at least partially based on data received from a source external to said charging device.

4. A charging device (104) in accordance with Claim 1, 2 or 3, wherein said controller (200) determines the start time to be when a delay time has elapsed after the initialization process has completed.

5. A charging device (104) in accordance with Claim 4, wherein said controller (200) determines the delay time based on a random value.

6. A charging device (104) in accordance with Claim 4 or Claim 5, further comprising a user interface (210), wherein a user selects the delay time using said user interface.

7. A charging device (104) in accordance with Claim 4, wherein said controller (200) overrides the delay time based on data received.

8. A controller (200) for use with a charging device (104), said control system comprising:
a memory device (204); and
a processor (202) coupled to said memory device, said processor configured to:
receive data from said memory device;
determine that an initialization process has completed after the charging device has experienced a loss of power;
determine a start time to deliver power to a power storage device (106) at least partially based on the data received; and
transmit a signal to a power delivery system (214) to cause the power delivery system to deliver power to the power storage device at the start time.

9. A controller (200) in accordance with Claim 8, wherein said processor (202) is configured to determine the start time to be substantially immediately after the initialization process has completed.

10. A controller (200) in accordance with Claim 8, wherein said processor (202) is configured to determine the start time at least partially based on data received from a source external to the charging device (104).

11. A controller (200) in accordance with Claim 8, 9 or 10, wherein said processor (202) is configured to determine the start time to be when a delay time has elapsed after the initialization process has completed.

12. A controller (200) in accordance with Claim 11, wherein said processor (202) is configured to determine the delay time based on a random value.

13. A controller (200) in accordance with Claim 11 or Claim 12, wherein the charging device includes a user interface (210) coupled to said processor (202), and wherein said processor is configured to determine the delay time based on data received from the user interface (210).

14. A controller (200) in accordance with Claim 11, 12 or 13, wherein said processor (202) is configured to override the delay time based on data received.

15. A method of assembling a charging device (104), said method comprising:
providing a power delivery system (214) configured to deliver power to a power storage device (106); and
coupling a controller (200) to the power delivery system (214), wherein the controller is configured to:
determine that an initialization process has completed after the charging device has experienced a loss of power;
select a start time for power to be delivered to the power storage device (106); and
enable the power delivery system (214) to deliver power to the power storage device at the selected start time.
